# EUROPÄISCHE PATENTSCHRIFT

(11) **EP 0 698 365 B1**
(45) Veröffentlichungstag und Bekanntmachung des Hinweises auf die Patenterteilung: **17.06.1998**
(21) Anmeldenummer: 95810504.1
(22) Anmeldetag: 10.08.1995
(51) Int. Cl.: A47J 37/06

(54) **Anlage zum Grillen von mit Grillgut bestückten Spiessen**
Plant for grilling spits equipped with grill-good
Dispositif de grillage pour brochettes

(30) Priorität: 23.08.1994 CH 2593/94
(43) Veröffentlichungstag der Anmeldung: 28.02.1996
(73) Patentinhaber: Maier, Urs, 8408 Winterthur (CH)
(72) Erfinder: Maier, Urs, 8408 Winterthur (CH)
(74) Vertreter: Schmauder, Klaus Dieter

(56) Entgegenhaltungen:
- DE-A- 3 420 764
- US-A- 1 638 452
- US-A- 3 295 434
- US-A- 4 382 403
- US-A- 4 854 226

## Beschreibung

Die Erfindung betrifft eine Anlage zum Grillen von mit Grillgut bestückten Spiessen gemäss dem Oberbegriff des Anspruches 1.

Anlagen der eingangs genannten Art sind in grosser Anzahl bekannt, so beispielsweise aus der US-PS 1 638 452, dabei sind die Spiesse jeweils in Lagern in den vorstehenden Armen herausnehmbar eingesetzt, dadurch ist das Beladen und Entladen der Anlage umständlich und zeitraubend.

Aufgabe der Erfindung ist es, eine Anlage der eingangs genannten Art zu schaffen, die die genannten Nachteile beseitigt.

Die Aufgabe wird erfindungsgemäss gelöst durch die kennzeichnenden Merkmale des Anspruches 1.

Durch das einfache Auflegen der Spiesse zwischen den Rollen ergibt sich ein besonders einfaches und rasches Beladen der Anlage und ermöglicht insbesondere ein automatisches Entladen an der Abgabestation, denn die mit Grillgut bestückten Spiesse können an der Abgabestation im unteren Umlenkbereich einfach nach unten herausfallen. Die Anlage ermöglicht somit ein besonders einfaches, rasches und damit rationelles Grillen von Grillgut.

Bevorzugte Ausgestaltungen der Erfindung sind in den Ansprüchen 2 bis 7 beschrieben.

Für die Ausgestaltung der Abgabestation ergeben sich die verschiedensten Möglichkeiten, angefangen von einem einfachen Aufnahmebehälter bis zu einer im Anspruch 2 genannten Ausgestaltung, die es ermöglicht, die Spiesse in der Reihenfolge ihrer Fertigstellung aufzureihen, so dass die Spiesse auch in der Reihenfolge ihrer Fertigstellung entnommen werden können und somit eine Gewähr für gleichbleibende Frische des Grillgutes gegeben ist.

Auch für die Ausgestaltung und den Antrieb der antreibbaren Rolle sind verschiedene Ausgestaltungen möglich, angefangen von einem eigenen motorischen Antrieb über am Gestell reibende Reibräder bis zur Ausbildung nach Anspruch 3, die besonders einfach und betriebssicher ist. Das Kettenrad und die stationäre Kette sind besonders einfach und betriebssicher, so dass auch die rauhen Betriebsbedingungen, die erfahrungsgemäss durch verspritzendes und verkrustendes Fett gegeben sind, den Antrieb nicht behindern können. Besonders vorteilhaft ist auch eine Ausgestaltung nach Anspruch 4, die es ermöglicht, dass für den Spiess ein ausreichender Überlappungsbereich an den Rollen gegeben ist, so dass auch Spiesse mit variierenden Längen sicher verarbeitet werden können.

Die Führungsorgane sorgen für eine reibungslose Übergabe der Spiesse vom Aufwärtstrum zum Abwärtstrum des Umlaufförderers. Dabei können die Führungsorgane aus einfachen ruhenden Führungsbahnen bestehen, vorteilhafter ist jedoch eine Ausgestaltung nach Anspruch 5, die ein sicheres Abnehmen und Übergeben der Spiesse sicherstellt.

Für die Umlauforgane sind ebenfalls verschiedene Ausgestaltungen denkbar, so können beispielsweise Seile, insbesondere Stahlseile verwendet werden, an denen die Arme angeklemmt sind. Vorteilhafter und betriebssicherer ist jedoch eine Ausgestaltung der Umlauforgane nach Anspruch 6.

Grundsätzlich ist es denkbar, dass die Anlage auf ein Minimum an Bauteilen beschränkt ist, insbesondere keinerlei Verkleidung aufweist. Vorteilhafter ist jedoch eine Ausgestaltung nach Anspruch 7, die den Heizbereich abschirmt. Dies hat mehrfache Vorteile. Durch die Abschirmung können sich klimatische Bedingungen, wie bespielsweise Wind, nicht nachteilig auf das Grillen auswirken. Die Abschirmung verbessert die Heizwirkung wesentlich und reduziert die erforderliche Durchlaufzeit für das Grillgut. Die Durchlaufzeit ist überdies vorteilhafterweise durch Variieren der Antriebsdrehzahl auf die Art des Grillgutes beziehungsweise die gewünschte Garzeit einstellbar. Andererseits bildet die Schutzwand auch eine Abschirmung des Heizbereiches gegenüber den übrigen Bauteilen der Anlage, die dadurch vor herumspritzendem Fett und dergleichen verschont werden. Dies fördert die Pflegeleichtigkeit und Lebensdauer der Anlage. Schliesslich dient die Abschirmung auch der Betriebssicherheit und dem Unfallschutz.

Ein Ausführungsbeispiel der erfindungsgemässen Anlage wird nachfolgend anhand der Zeichnungen näher beschrieben, dabei zeigen:
- Figur 1: eine Anlage im Vertikalschnitt I-I der Figur 1;
- Figur 2: die Anlage der Figur 1 im Schnitt II-II; und
- Figur 3: die Anlage im Schnitt III-III der Figur 2.

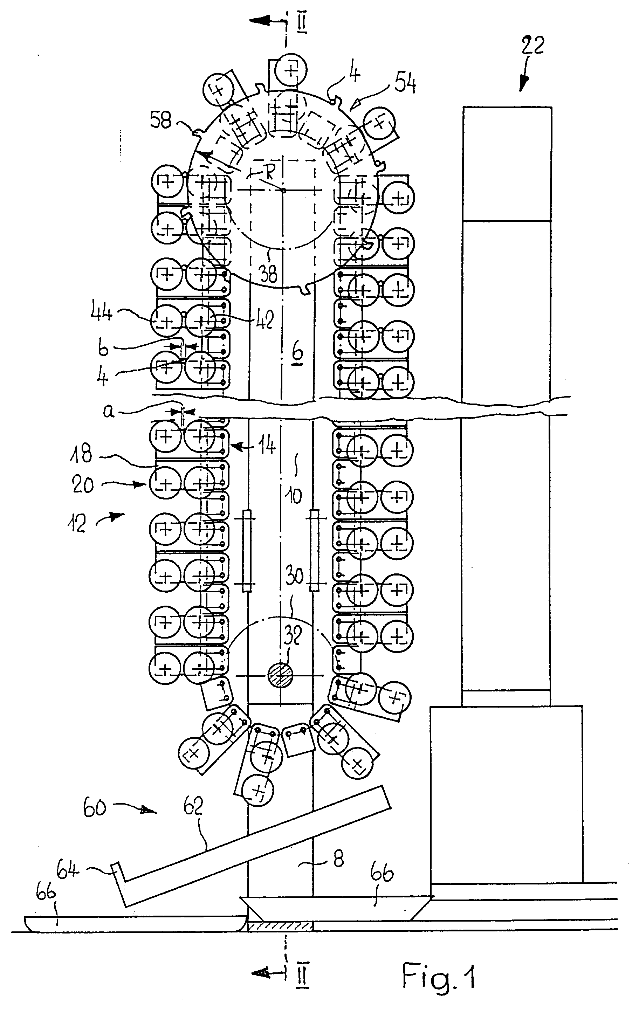

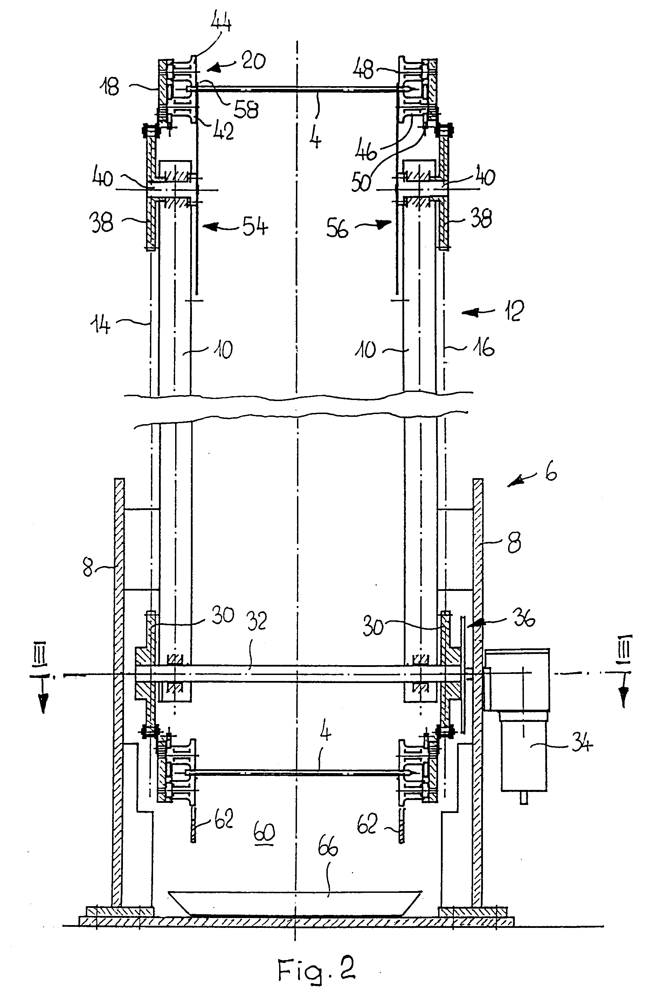

Die in den Figuren 1 bis 3 schematisch dargestellte Anlage zum Grillen von mit Grillgut 2 bestückten Spiessen 4 enthält ein Gestell 6 mit Bodenstützen 8 und Vertikalträgern 10. An den Vertikalträgern 10 des Gestells 6 ist ein Umlaufförderer 12 angeordnet, der zwei mit Abstand voneinander angeordnete Umlauforgane 14,16 enthält, die jeweils mit über die Länge verteilten senkrecht nach aussen vorstehenden Armen 18 bestückte sind. Diese enthalten Mittel 20 zur Aufnahme und zum Drehen der Spiesse 4. Dem Abwärtstrum des Umlaufförderers 12 ist eine Heizwand 22 zugeordnet, die in nicht näher dargestellter Weise im Abstand zum Umlaufförderer 12 einstellbar ist. Die Heizwand besteht aus an drei Seiten angeordneten Vertikalwänden 24, einem Boden 26 und einem Gitter 28, das dem Umlaufförderer 12 und damit dem Spiess 4 zugewandt ist.

Der Umlaufförderer 12 bzw. dessen Umlauforgane 14,16 sind als Getriebeketten ausgestaltet, die am unteren Ende über Kettenräder 30 geführt sind, welche an einer Welle 32 befestigt sind. Letztere ist in den Vertikalträgern 10 gelagert und wird durch einen Getriebemotor 34 angetrieben, der in seiner Antriebesgeschwindigkeit vorzugsweise einstellbar ist. Der Getriebemotor 34 ist über ein Kettengetriebe 36 mit der Welle 32 gekuppelt. Am oberen Ende der Vertikalträger 10 sind die Umlauforgane 14,16 ebenfalls über Kettenräder 38 geführt, die an Wellen 40 befestigt sind, welche wiederum in den Vertikalträgern 10 gelagert sind.

An den Getriebeketten der Umlauforgane 14,16 sind die Arme 18 befestigt, die senkrecht nach aussen vorstehen und jeweils zwei Rollen 42,44 tragen, deren Umfangsabstand a kleiner ist als der Durchmesser d der Spiesse 4. Die Rollen 42,44 enthalten überdies einen gegen den Arm 18 gerichteten Lagerteil 46, um die Rollen 42,44 auf Abstand zu den Armen 18 zu halten. Die Rollen 42,44 sind auf Achsstummeln 48 gelagert, die an den Armen 18 befestigt sind. Die jeweils den Umlauforganen 14,16 zugewandten Rollen 42 tragen an ihrem Lagerteil 46 ein Treibrad 50, das auf der der Heizwand 22 zugewandten Seite, d.h. dem Abwärtstrum mit einem Antriebsorgan 52, beispielsweise mit einer am Vertikalträger 10 befestigten Getriebekette zusammenwirkt, so dass die Rolle 42 bei der Abwärtsbewegung des Umlaufförderers konstant angetrieben wird. Am oberen Umlenkbereich ist jedem Umlauforgan 14,16 ein Führungsorgan 54,56 zugeordnet, welches im oberen Umlenkbereich des Umlenkförderers die Übergabe jedes Spiesses von einem Arm auf den vorderen unterstützt, wie insbesondere aus dem oberen Teil der Figur 1 ersichtlich ist. Die Führungsorgane 54,56 sind als Scheiben ausgebildet, die an der Welle 40 des zugehörigen Kettenrades 38 befestigt und von diesem angetrieben werden. Der Radius R der Führungsscheiben 54,56 entspricht im wesentlichen dem Radius der Umlaufbahn der Spiesse im Umlaufbereich. Am Umfang der scheibenförmigen Führungsorgane 54,56 sind radial vorstehende Mitnehmerhaken 58 angeordnet, die beim Überschreiten des Kulminationspunktes des Umlaufförderers die freiwerdenden Spiesse 4 jeweils auffangen und an den vorausgehenden Arm sanft und kontrolliert abgeben, so dass die einwandfreie Auflage sichergestellt wird.

Am unteren Umlaufbereich des Umlaufförderers 12 ist eine Abgabestation 60 vorhanden, die zwei parallele Schienen 62 enthält, welche vom Umlaufförderer 12 ausgehend schräg nach unten geneigt sind und in einem Auffangteil 64 endigen. Anstelle der geneigten Anordnung der Schienen können diese auch horizontal ausgerichtet und so dem Umlaufförderer zugeordnet sein, dass ein auf den Schienen abgelegter Spiess vom nachfolgenden Arm in Richtung des Auffangteiles gefördert wird und dabei die früher abgelegten Spiesse vor sich herschiebt. Auffangschalen 66 unterhalb der Schienen 62 fangen herabtropfende Flüssigkeit auf.

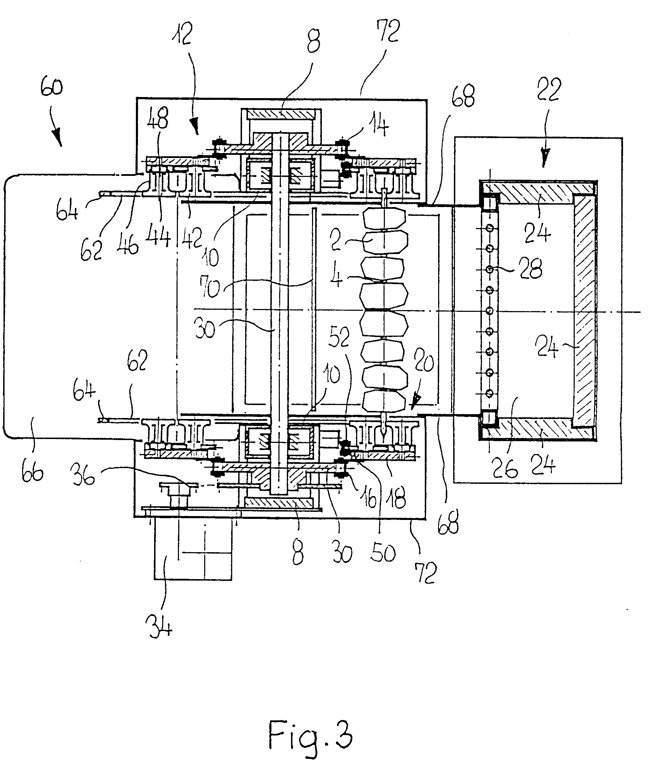

Um ein gleichmässiges Beheizen der mit Grillgut 2 bestückten Spiesse 4 zu gewährleisten, ist der Bereich des Abwärtstrums des Umlaufförderers 12 mit Seitenwänden 68 versehen sowie mit einer parallel zur Heizwand 22 angeordneten Wand 70, die vorzugsweise aus Glas besteht, um ein Beobachten des Grillgutes 2 zu ermöglichen. Wie aus Figur 3 weiter hervorgeht, kann die Anlage auch mit seitlichen Gehäusewänden 72 verschalt sein.

### BEZUGSZEICHENLISTE

- a: Umfangsabstand
- b: Durchmesser des Spiesses
- R: Durchmesser des Führungsorganes
- 2: Grillgut
- 4: Spiess
- 6: Gestell
- 8: Bodenstütze
- 10: Vertikalträger
- 12: Umlaufförderer
- 14: Umlauforgan
- 16: Umlauforgan
- 18: Arm
- 20: Mittel
- 22: Heizwand
- 24: Vertikalwand
- 26: Boden
- 28: Gitter
- 30: Kettenrad
- 32: Welle
- 34: Getriebemotor
- 36: Kettengetriebe
- 38: Kettenrad
- 40: Welle
- 42: Rolle
- 44: Rolle
- 46: Lagerteil
- 48: Achsstummel
- 50: Treibrad
- 52: Antriebsorgan
- 54: Führungsorgan
- 56: Führungsorgan
- 58: Mitnehmerhaken
- 60: Abgabestation
- 62: Schiene
- 64: Auffangteil
- 66: Auffangschale
- 68: Seitenwand
- 70: Wand
- 72: Gehäusewand

## Patentansprüche

1. Anlage zum Grillen von mit Grillgut (2) bestückten Spiessen (4), mit einem mittels eines Motors (34) angetriebenen vertikal ausgerichteten Umlaufförderer (12), der zwei mit Abstand voneinander angeordnete, synchron umlaufende Umlauforgane (14,16) enthält, die jeweils mit über die Länge verteilten senkrecht nach aussen vorstehenden Armen (18) versehen sind, die jeweils Mittel (20) zur Aufnahme und zum Drehen der Spiesse (4) enthalten, wobei ein Trum des Umlaufförderers (12) dem Beladen mit Spiessen (4) dient und dem anderen Trum eine vertikale Heizwand (22) zugeordnet ist, dadurch gekennzeichnet, dass das Aufwärtstrum des Umlaufförderers (12) dem Beladen dient und die nach aussen vorstehenden Arme (18) jeweils zwei Rollen (42,44) aufweisen, von denen eine Rolle (42) antreibbar ist und deren Umfangsabstand (a) kleiner ist als der Durchmesser (d) des zwischen den Rollen (42,44) aufzulegenden Spiesses (4), wobei im oberen Umlenkbereich (38,40) jedem Umlauforgan (14,16) ein Führungsorgan (54,56) zugeordnet ist, welches im oberen Umlenkbereich die Übergabe jedes Spiesses (4) von einem Arm (18) auf den vorderen unterstützt und dass die Heizwand (22) dem Abwärtstrum des Umlaufförderers (12) zugeordnet ist, wobei am unteren Umlenkbereich (30,32) des Umlaufförderers (12) eine Abgabestation (60) angeordnet ist.

2. Anlage nach Anspruch 1, dadurch gekennzeichnet, dass die Abgabestation (60) zwei parallele Schienen (62) aufweist, die vom Umlaufförderer (12) ausgehend in einem Auffangteil (64) endigen.

3. Anlage nach Anspruch 1, dadurch gekennzeichnet, dass die antreibbare Rolle (42) mit einem Treibrad (50), vorzugsweise einem Kettenrad versehen ist, das mindestens im Bereich der Heizwand (22) mit einem am Gestell (6) angeordneten Antriebsorgan (52), vorzugsweise einer Kette, zusammenwirkt.

4. Anlage nach einem der Ansprüche 1 bis 3, dadurch gekennzeichnet, dass jede Rolle (42,44) einen gegen den Arm (18) gerichteten Lagerteil (46) kleineren Durchmesser aufweist.

5. Anlage nach einem der Ansprüche 1 bis 4, dadurch gekennzeichnet, dass das Führungsorgan (54,56) eine synchron mit dem Umlaufförderer (12) angetriebene Führungsscheibe ist, deren Radius (R) im wesentlichen dem Radius der Umlaufbahn der Spiesse (4) im Umlaufbereich (38,40) entspricht und die vorzugsweise mit am Umfang verteilten, radial vorstehenden Mitnehmerhaken (58) versehen ist.

6. Anlage nach einem der Ansprüche 1 bis 5, dadurch gekennzeichnet, dass die Umlauforgane (14,16) jeweils endlose Getriebeketten aufweisen.

7. Anlage nach einem der Ansprüche 1 bis 6, dadurch gekennzeichnet, dass mindestens im Heizbereich der das mit den Spiessen (4) belegte Trum umgebende Raum mit Ausnahme des Bereiches der Heizwand (22) mit einer Schutzwand (68,70) umgeben ist.

## Claims

1. An apparatus for grilling items (2) fitted on skewers (4), with a vertically arranged rotating conveyor (12) driven by a motor (34) and containing two rotator units (14,16) arranged with a space between then, and rotating simultaneously, these having perpendicularly outward-projecting arms (18) distributed over their length, each containing a means (20) of receiving and turning the skewers (4), one side of the rotating conveyor (12) being used for loading the skewers and the other side having an adjacent vertical heating-panel (22), characterized in that the upward-moving side of the rotating conveyor (12) is used for loading and the perpendicularly projecting arms (18) each have two rollers (42, 44), of which one (42) may be driven, the gap (a) between their perimeters being smaller than the diameter (d) of the skewer (4) to be placed between the rollers (42, 44), wherein in the upper roll-over area (38, 40) a guide (54, 56) is supplied for each rotator unit (14,16) which in the upper roll-over area supports the transfer of each skewer (4) from one arm (18) onto the one in front, and in that the heating-panel (22) is adjacent to the downward-moving side of the rotating conveyor (12), a delivery point (60) being situated at the lower roll-over area (30, 32) of the rotating conveyor (12).

2. An apparatus as claimed in Claim 1, characterized in that the delivery point (60) has two parallel rails (62) running from the rotating conveyor (12) and ending in a reception unit (64).

3. An apparatus as claimed in Claim 1, characterized in that the driveable roller (42) is equipped with a driving-wheel (50), preferably a chain wheel, which, at least in the area of the heating-panel (22), co-operates with a driver (52), preferably a chain, situated on the stand (6).

4. An apparatus as claimed in one of Claims 1 to 3, characterized in that each roller (42,44) has a bearing section (46) of smaller diameter, directed towards the arm (18).

5. An apparatus as claimed in one of Claims 1 to 4, characterized in that the guide (54, 56) is a guide-disc, driven simultaneously with the rotating conveyor (12), whose radius (R) corresponds essentially to the radius of the rotation path of the skewers (4) in the roll-over area (38, 40) and which is preferably equipped with radially protruding carrier hooks (58) distributed over its perimeter.

6. An apparatus as claimed in one of Claims 1 to 5, characterized in that the rotator units (14, 16) each have continuous drive chains.

7. An apparatus as claimed in one of Claims 1 to 6, characterized in that at least in the heating area the space surrounding the section carrying the skewers (4) is surrounded by a protective wall, except in the area of the heating-panel itself.

## Revendications

1. Installation pour griller des brochettes (4) garnies de produit à griller (2), comprenant un convoyeur vertical (12) entraîné par un moteur (34), ce convoyeur ayant deux organes de renvoi (14, 16) tournant en synchronisme, distants l'un de l'autre, et qui sont garnis de bras (18), répartis sur la longueur, et venant perpendiculairement en saillie, avec des moyens (20) pour recevoir et faire tourner les brochettes (4), un brin du convoyeur sans fin (12) servant à charger avec des brochettes (4) et l'autre brin étant tourné vers une paroi chauffante verticale (22), caractérisée en ce que
• le brin montant du convoyeur sans fin (12) sert au chargement et les bras (18) en saillie vers l'extérieur comportent chaque fois deux galets (42, 44), un galet (42) étant entraîné et sa distance périphérique (a) étant inférieure au diamètre (d) de la brochette (4) placée entre les galets (42, 44),
• dans la zone de renvoi supérieure (38, 40) un organe de guidage (54, 56) est associé à chaque organe de renvoi (14, 16), cet organe assurant, dans la zone de renvoi supérieure, le transfert de chaque brochette (4) d'un bras (18) au bras précédent et
• la paroi chauffante (22) est associée au brin descendant du convoyeur sans fin (12),
• un poste de sortie (60) étant prévu dans la zone de renvoi inférieure (30, 32) du convoyeur sans fin (12).

2. Installation selon la revendication 1,
caractérisée en ce que
le poste de sortie (60) comporte deux rails parallèles (62) qui se terminent, en partant du convoyeur sans fin (12), dans une partie de réception (64).

3. Installation selon la revendication 1,
caractérisée en ce que
le galet entraîné (42) est muni d'une roue motrice (50), de préférence une roue à chaîne qui coopère, au moins dans la zone de la paroi chauffante (22), avec un organe d'entraînement (52) prévu sur un bâti (6), de préférence une chaîne.

4. Installation selon l'une quelconque des revendications 1 à 3,
caractérisée en ce que
chaque galet (42, 44) comporte une partie de palier (46), de petit diamètre tournée vers le bras (18).

5. Installation selon l'une des revendications 1 à 4,
caractérisée en ce que
l'organe de guidage (54, 56) est un rail de guidage entraîné avec le convoyeur sans fin (12) dont le rayon (R) correspond sensiblement au rayon de la trajectoire des brochettes (4) dans la zone périphérique (38, 40) et qui comporte de préférence des crochets d'entraînement (58) radialement en saillie et répartis à la périphérie.

6. Installation selon l'une des revendications 1 à 5,
caractérisée en ce que
les organes de renvoi (14, 16) comportent chaque fois des chaînes de transmission sans fin.

7. Installation selon l'une des revendications 1 à 6,
caractérisée en ce qu'
au moins dans la zone chauffante du brin occupé par les brochettes (4), l'espace environnant, à l'exception de la zone de la paroi chauffante (22), est muni d'une cloison protectrice (68, 70).
